# EUROPEAN PATENT APPLICATION

(11) **EP 3 327 387 A1**
(43) Date of publication of application: **30.05.2018**
(21) Application number: 16860112.8
(22) Date of filing: 12.10.2016
(51) Int. Cl.: F25D 23/06, F25D 23/08

(54) **VACUUM INSULATION MATERIAL, VACUUM INSULATION MATERIAL MANUFACTURING METHOD, AND REFRIGERATOR INCLUDING VACUUM INSULATION MATERIAL**

(30) Priority: 26.10.2015 KR 20150148713
(71) Applicant: Samsung Electronics Co., Ltd., Suwon-si, Gyeonggi-do 16677 (KR)
(72) Inventor: PARK, Jin Hyun, Osan-si Gyeonggi-do 18105 (KR); KAL, Seung Hoon, Uiwang-si Gyeonggi-do 16050 (KR); KIM, Hyung Sung, Yongin-si Gyeonggi-do 16872 (KR); YOOK, Se Won, Suwon-si Gyeonggi-do 16514 (KR); JUNG, Hae Yong, Suwon-si Gyeonggi-do 16676 (KR)
(74) Representative: Taor, Simon Edward William
(86) International application number: PCT/KR2016/011413
(87) International publication number: WO 2017/073928

(57) **Abstract**

Disclosed are a vacuum insulation material having a structure from which a folding process can be removed, a vacuum insulation material manufacturing method, and a refrigerator including the vacuum insulation material. The vacuum insulation material comprises: a core material; a first outer cover material disposed at the outside of the core material; a second outer cover material coupled to the first outer cover material so as to form an accommodation space in which the compressed core material is accommodated; and coupling parts provided at edges of the first outer cover material and the second outer cover material, wherein the length of the coupling part is 10-30 mm.

## Description

### [Technical Field]

The present invention relates to a vacuum insulation material, a vacuum insulation material manufacturing method, and a refrigerator including the vacuum insulation material, and more particularly, to a vacuum insulation material in which a folding process is deletable, a vacuum insulation material manufacturing method, and a refrigerator including the vacuum insulation material.

### [Background Art]

Energy consumed by humanity is limited. Along with the energy crisis, global warming, due to carbon dioxide generated as a result of the consumption of the limited energy, is humanity's biggest problem. Accordingly, energy regulations for each country are being strengthened day by day, and energy rating systems for household appliances are a permanent assignment for manufacturers. The government's energy rating system, requiring maximum efficiency with less energy, is in good agreement with the needs of consumers, who look for high appropriate content amount and low power consumption. In particular, a lot of research on refrigerators has been conducted over the past several decades, and research on efficiency improvement for a cooling cycle, a compressor, a heat exchanger, and the like has already reached its limit. Accordingly, in recent years, research on heat loss has been mainly conducted, and numerous attempts have been made to increase energy efficiency by enhancing heat insulating performance of refrigerators.

An existing heat insulating material, such as polyurethane, has a thermal conductivity of about 20 mK/m·K. When the existing heat insulating material is used, a thickness of an outer wall of a refrigerator is increased, resulting in a reduction in storage capacity of the refrigerator. Accordingly, in order to solve this problem, there is a need for the use of a vacuum insulation material having excellent heat insulating performance.

However, since a heat bridge phenomenon (a phenomenon in which heat flows through an edge of the vacuum insulation material) and durability of the vacuum insulation material are in conflict with each other, there is a limit in efficiently manufacturing the vacuum insulation material.

### [Disclosure]

### [Technical Problem]

The present disclosure is directed to providing a vacuum insulation material in which a folding process is deletable, a vacuum insulation material manufacturing method, and a refrigerator including the vacuum insulation material.

The present disclosure is also directed to providing a vacuum insulation material capable of improving durability, a vacuum insulation material manufacturing method, and a refrigerator including the vacuum insulation material.

The present disclosure is also directed to providing a vacuum insulation material that can reduce the cost of manufacturing due to the reduction of the sheath material and tape consumption and the process elimination, a vacuum insulation material manufacturing method, and a refrigerator including the vacuum insulation material.

### [Technical Solution]

In accordance with an aspect of the present disclosure, a vacuum insulation material comprising: a core material; a first outer cover material disposed outside of the core material; a second outer cover material coupled to the first outer cover material to form an accommodation space accommodating the core material therein; and a coupling part provided at an edge of each of the first outer cover material and the second outer cover material, wherein the coupling part has a length of about 10 mm to about 30 mm.

The coupling part has a sealing part provided at the edge of each of the first outer cover material and the second outer cover material and sealed through at least one of welding and adhering, and a surplus part provided inside of the sealing part.

After the core material is inserted into the accommodation space, the surplus part is formed by at least one of vacuum pressing and thermal pressing.

The core material has a thickness of about 12 mm or less.

The sealing part has a length of about 1 mm to about 5 mm.

The first and second outer cover materials each have a first region contacting an outer surface of the core material and a second region placed at an edge of the first region and not contacting the core material.

One side of the second region is fixedly connected to the first region, and the other side of the second region is a free end.

The second region has a length of about 10 mm to about 30 mm.

At least one direction of the coupling part has a folded portion provided so as to contact the first region.

The folded portion is fixed to the first region by an adhesive member.

The core material is pressed through at least one of press pressing, thermal pressing and low-vacuum pressing.

### [Advantageous Effects]

According to an aspect of the present invention, a pinhole or a crack generated at an edge of a vacuum insulation material can be prevented by minimizing folding processes, thereby reducing a defective proportion.

In addition, manufacturing costs can be reduced by reducing consumption of an outer cover material and a tape, and deleting a process.

Furthermore, a slim design of a refrigerator may be realized and a storage capacity of the refrigerator may be increased at the same time by using a slim vacuum insulation material having excellent heat insulating performance between an inner case and an outer case of the refrigerator.

### [Description of Drawings]

FIG. 1 is a perspective view illustrating an exterior of a refrigerator according to an exemplary embodiment of the present invention,
FIG. 2 is a cross-sectional view illustrating the refrigerator according to the exemplary embodiment of the present invention,
FIG. 3 is a perspective view illustrating a vacuum insulation material according to an exemplary embodiment of the present invention,
FIG. 4 is a perspective view illustrating a core material of the vacuum insulation material according to the exemplary embodiment of the present invention,
FIGS. 5 to 7 are schematic views showing pressing processes of the core material according to the exemplary embodiment of the present invention,
FIG. 8 is an exploded perspective view illustrating the outer cover material of the vacuum insulation material before coupling, according to the exemplary embodiment of the present invention,
FIG. 9 is a view illustrating the outer cover material of the vacuum insulation material after the coupling, according to the exemplary embodiment of the present invention,
FIG. 10 is a front view illustrating the outer cover material of the vacuum insulation material according to the exemplary embodiment of the present invention, FIG. 11 is a cross-sectional view taken along line A-A' of FIG. 3,
FIG. 12 is a view illustrating the outer cover material and the core material before being inserted into the outer cover material according to the exemplary embodiment of the present invention,
FIG. 13 is a view illustrating a state in which the core material is inserted into the outer cover material of the vacuum insulation material according to the exemplary embodiment of the present invention,
FIG. 14 is a view illustrating a state in which the vacuum insulation material according to the exemplary embodiment of the present invention is vacuumized,
FIG. 15 is a view illustrating the completed vacuum insulation material according to the exemplary embodiment of the present invention,
FIG. 16 is a view illustrating a state in which a core material is inserted into an outer cover material according to another exemplary embodiment of the present invention and the outer cover material is vacuumized,
FIG. 17 is a view illustrating a state in which one side of a vacuum insulation material according to another embodiment of the present invention is folded,
FIG. 18 is a perspective view illustrating the vacuum insulation material according to another embodiment of the present invention,
FIG. 19 is a cross-sectional view taken along line B-B' of FIG. 18. Reference numerals not shown in the drawings may be seen from FIGS. 1 to 8.

### [Modes of the Invention]

Hereinafter, exemplary embodiments of the present invention will be described in detail with reference to the accompanying drawings. Meanwhile, terms such as "front end", "rear end", "upper portion", "lower portion", "upper end" and "lower end" used in the description below are defined based on the drawings, and shapes and positions of each of the elements are not limited by the terms.

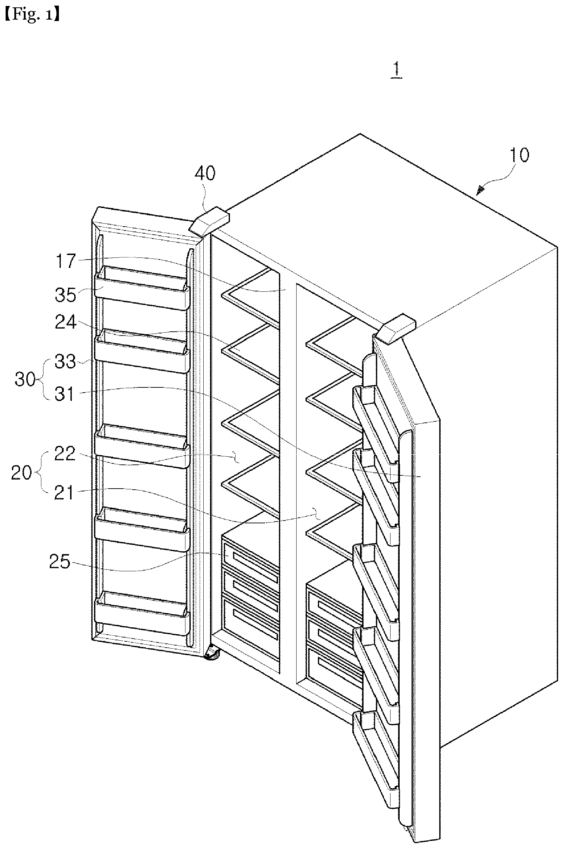

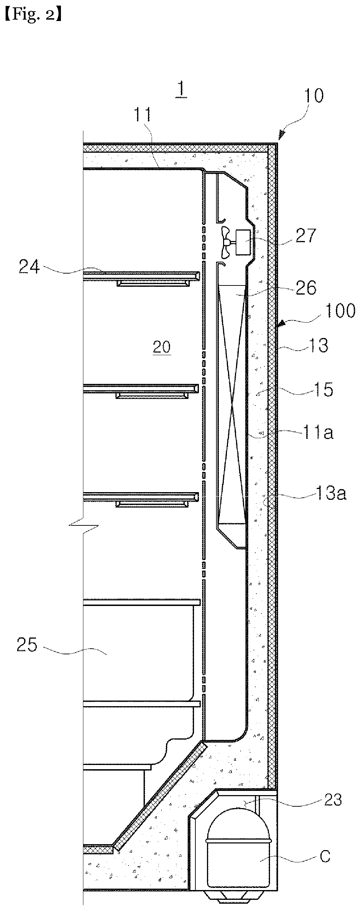

FIG. 1 is a perspective view illustrating an exterior of a refrigerator according to an exemplary embodiment of the present invention, and FIG. 2 is a cross-sectional view illustrating the refrigerator according to the exemplary embodiment of the present invention.

As shown in FIGS. 1 and 2, a refrigerator 1 may include a main body 10 forming the exterior thereof and a storage compartment 20 provided in the main body 10 to have an opened front surface.

The main body 10 may include an inner case 11 forming the storage compartment 20, an outer case 13 forming the exterior, and a cool air supplying device (not shown) supplying cool air to the storage compartment 20.

The cool air supplying device may include a compressor C, a condenser (not shown), an expansion valve (not shown), an evaporator 26, a blower fan 27, and the like. A foam heat insulating material 15 may be foamed between the inner case 11 and the outer case 13 of the main body 10 to prevent cool air from being discharged from the storage compartment 20.

A machine room 23 may be provided at a lower rear portion of the main body 10 such that the compressor C for compressing a refrigerant, and the condenser for condensing the compressed refrigerant, are installed therein.

The storage compartment 20 may be partitioned into left and right sides by a partition wall 17. A refrigerator compartment 21 may be provided at the right side of the main body 10, and a freezer compartment 22 may be provided at the left side of the main body 10.

The refrigerator 1 may further include a door 30 configured to open and close the storage compartment 20.

The refrigerator compartment 21 and the freezer compartment 22 may be respectively opened and closed by a refrigerator door 31 and a freezer door 33, which are pivotably coupled to the main body 10. A plurality of door guards 35 may be provided at rear surfaces of the refrigerator door 31 and the freezer door 33 to accommodate food or the like.

A plurality of shelves 24 may be provided in the storage compartment 20 to divide the storage compartment 20 into a plurality of sections. Articles such as food may be loaded on the shelves 24.

In addition, a plurality of storage boxes 25 may be provided to be taken in and out of the storage compartment 20 in a slidable manner.

The refrigerator 1 may further include a hinge 40 such that the door 30 is rotatably coupled to the main body 10.

A foaming space S is provided between the inner case 11 and the outer case 13, the inner case 11 forming the storage compartment 20 and the outer case 13 being disposed outside of the inner case 11 to form the exterior. The foaming space S is filled with the foam heat insulating material 15.

In order to strengthen a heat insulation property of the foam heat insulating material 15, the foaming space S may be filled with a vacuum insulation panel (VIP) 100 in addition to the foam heat insulating material 15.

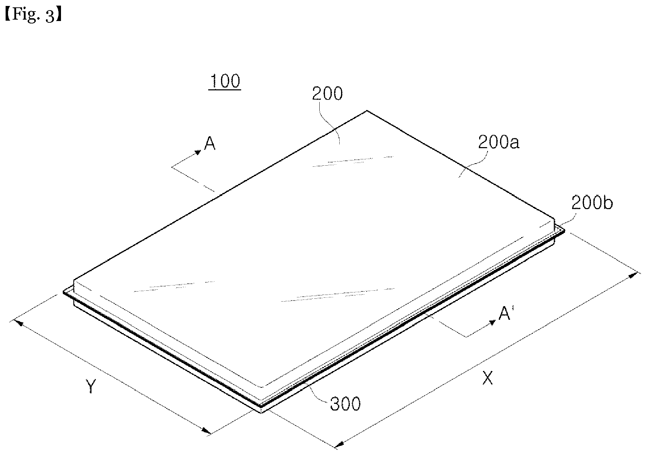

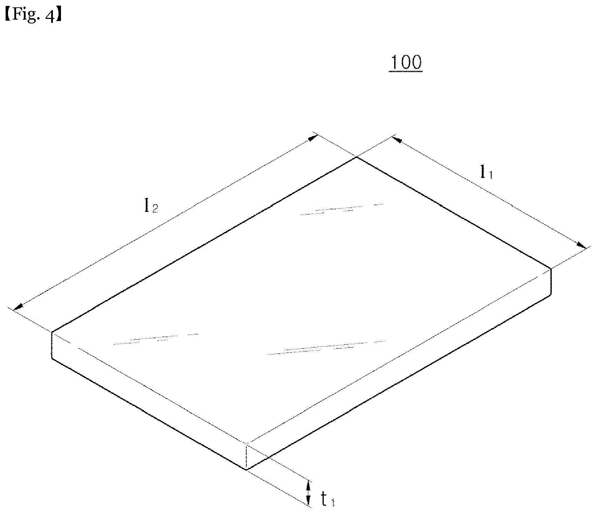

FIG. 3 is a perspective view illustrating a vacuum insulation material according to an exemplary embodiment of the present invention, and FIG. 4 is a perspective view illustrating a core material of the vacuum insulation material according to the exemplary embodiment of the present invention. As shown in FIGS. 3 and 4, a vacuum insulation material 100 may include a core material 110 and an outer cover material 200.

The outer cover material 200 is a very important material that maintains the lifespan of the vacuum insulation material 100 by preventing a fine gas and moisture from penetrating into the interior in a vacuum state of the vacuum insulation material 100.

The core material 110 may include a glass fiber having excellent heat insulating performance. Here, a high heat insulating effect may be obtained when the core material 110 desirably has a structure in which panels woven with a fine glass fiber are laminated on one another. Specifically, since heat insulating performance, i.e., a radiation influence, is minimized as a pore size is decreased between the glass fibers, it is possible to expect a high heat insulating effect.

The core material 110 may include at least one selected from an organic fiber and an inorganic fiber. A high heat insulating effect may be obtained when the core material 110 desirably has a structure in which panels woven with a fine glass fiber are laminated on one another. Specifically, since heat insulating performance, i.e., a radiation influence, is minimized as a pore size is decreased between the glass fibers, it is possible to obtain a high heat insulating effect.

The core material 110 may include glass wool.

The core material 110 may be formed in a plate shape. The core material 110 may be formed in a tetragonal plate shape having a horizontal length 11 and a vertical length 12. The horizontal length 11 and the vertical length 12 of the core material 110 may be variously modified according to the size and shape of the vacuum insulation material 100.

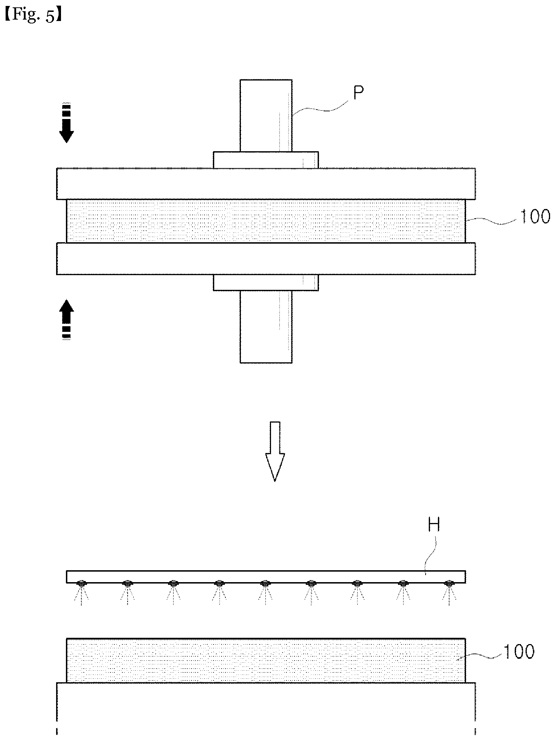

FIGS. 5 to 7 are schematic views showing pressing processes of the core material according to the exemplary embodiment of the present invention.

As shown in FIGS. 5 to 7, the core material 110 may be formed to have a first thickness t1 through a pressing process.

An existing core material is prepared to be thick due to a structure in which panels woven with a glass fiber are laminated on one another. For example, the existing core material may have a thickness of about 44 mm.

The aforementioned existing thick core material may be prepared through any one of roll pressing, thermal pressing, and vacuum pressing.

The core material 110 may be formed through thermal pressing. As shown in FIG. 5, a thick core material may be forcibly pressed using a mechanism such as a press P and then be heat-treated at a high temperature by using a heater H or the like to fix a shape thereof.

Here, the thickness of the core material 100 may be reduced by about 50% or more, compared to that of the existing core material.

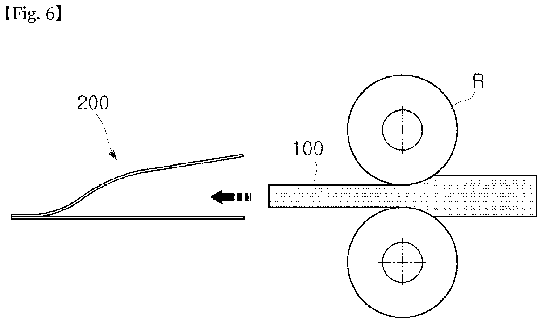

In addition, the core material 110 may be formed through roll pressing. As shown in FIG. 6, the core material 110 may pass through rolls R placed on upper and lower sides thereof and then be inserted into the outer cover material 200 to fix a shape thereof.

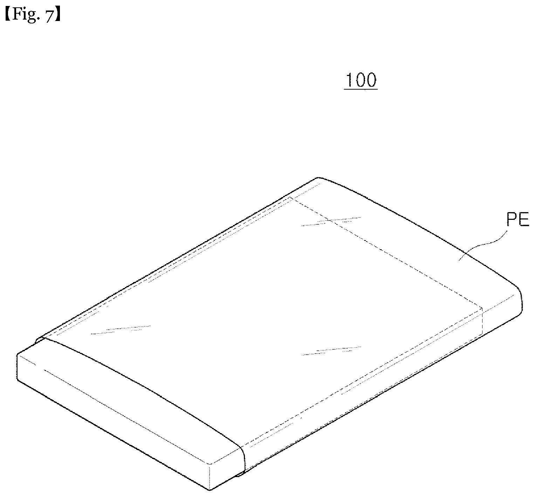

As shown in FIG. 7, the core material 110 may be inserted into a bag PE and then be pressed through low vacuum packing to fix a shape thereof. Here, the bag PE may include a very thin material. The bag PE may include a thin polymer film (PE) material.

The core material 110 may be inserted into the outer cover material 200 to fix the shape thereof in a state of being inserted into the bag PE and then being pre-pressed through low vacuum packing.

Here, a vacuum level may be in a range of about 5 torr to about 700 torr.

Meanwhile, the first thickness t1 of the core material 110, pressed through any one of thermal pressing, roll pressing, vacuum pressing, and pressing using the bag including the PE material described above, may be about 12 mm or less. The first thickness t1 may be about 12 mm or less.

In addition, although not shown, the core material 110 heat-dried at a high temperature may be instantaneously pressed and then be inserted into an outer cover material bag to fix the shape thereof.

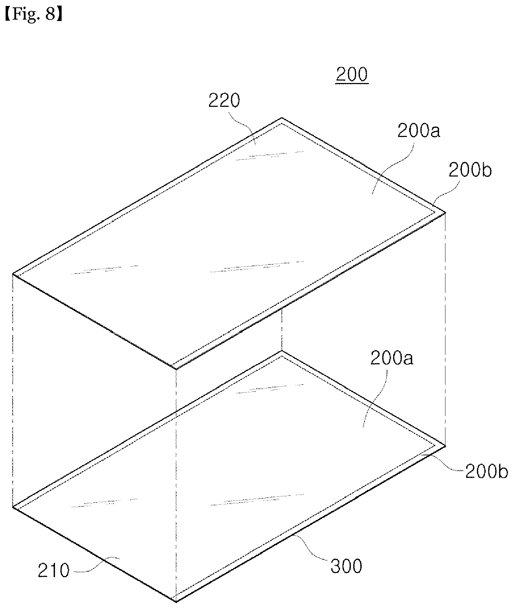

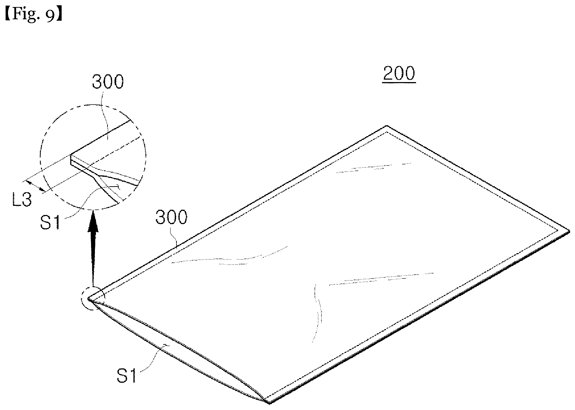

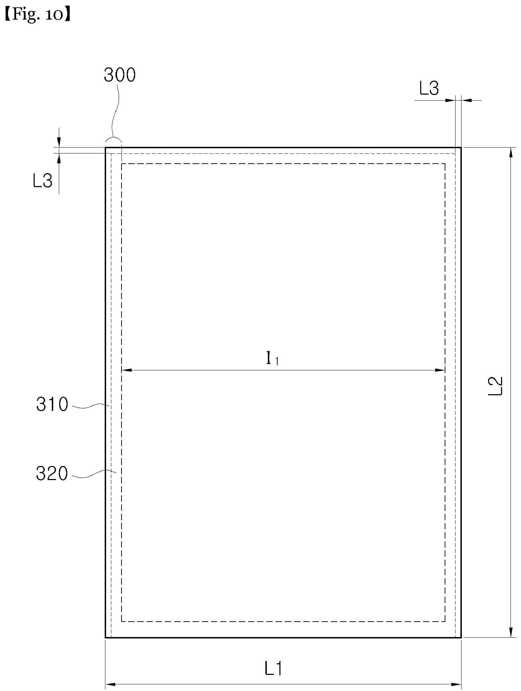

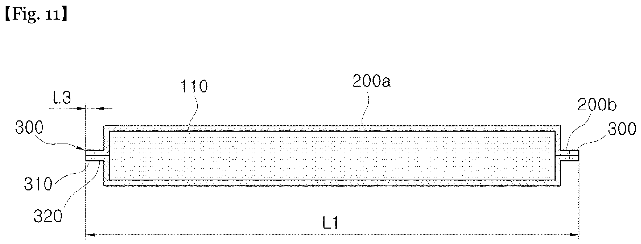

FIG. 8 is an exploded perspective view illustrating the outer cover material of the vacuum insulation material before coupling, according to the exemplary embodiment of the present invention. FIG. 9 is a view illustrating the outer cover material of the vacuum insulation material after the coupling, according to the exemplary embodiment of the present invention. FIG. 10 is a front view illustrating the outer cover material of the vacuum insulation material according to the exemplary embodiment of the present invention. FIG. 11 is a cross-sectional view taken along line A-A' of FIG. 3.

As shown in FIGS. 8 to 11, the outer cover material 200 of the vacuum insulation material 100 may include a first outer cover material 210 and a second outer cover material 220.

The first outer cover material 210 may be disposed on one side surface of the core material 110, and the second outer cover material 220 may be disposed on the other side surface of the core material 110. The first outer cover material 210 and the second outer cover material 220 may be disposed to face each other with the core material 110 interposed therebetween.

Here, the first outer cover material 210 and the second outer cover material 220 may have different thermal conductivities. Specifically, the first outer cover material 210 having low thermal conductivity may be disposed outside of the core material 110 so as to face an inner surface 13a of the outer case 13. The second outer cover material 220 having high thermal conductivity may be disposed outside of the core material 110 so as to face an outer surface 11a of the inner case 11. The second outer cover material 220 may be coupled to the first outer cover material 210 to form an accommodation space S1 accommodating the core material 110.

In addition, the first outer cover material 210 may include an aluminum-deposited outer cover material, and the second outer cover material 220 may include an aluminum foil outer cover material. The aluminum foil outer cover material may have low moisture and gas permeability, but heat insulating performance thereof may be lowered due to the generation of a heat bridge phenomenon (a phenomenon in which heat flows through an edge of a vacuum insulation material). On the contrary, the aluminum-deposited outer cover material may have a thin aluminum layer compared to the aluminum foil outer cover material to prevent a heat bridge phenomenon, but durability thereof may be lowered due to high moisture and gas permeability thereof. Therefore, a heat bridge phenomenon may be prevented and durability may be improved at the same time due to the first outer cover material 210 and the second outer cover material 220 made of different materials so as to have different thermal conductivities.

Meanwhile, the first outer cover material 210 and the second outer cover material 220 may have different thicknesses so as to have different thermal conductivities. In addition, the first outer cover material 210 and the second outer cover material 220 may have different laminated structures. Specifically, layers respectively constituting the first outer cover material 210 and the second outer cover material 220 may be different from each other.

The first outer cover material 210 and the second outer cover material 220 may be coupled to each other to form the accommodation space S1 therebetween, capable of accommodating the core material 110.

The first outer cover material 210 and the second outer cover material 220 may have a coupling part 300 at edges thereof.

The coupling part 300 may be provided at each of the edges such that the first outer cover material 210 and the second outer cover material 220 are coupled to each other. The coupling part 300 may be provided such that the first outer cover material 210 and the second outer cover material 220 are coupled to each other to form a bag shape having an opened one side. The coupling part 300 may be provided such that at least three of four edges of the first outer cover material 210 are coupled to at least three of four edges of the second outer cover material 220.

The coupling part 300 may have a sealing part 310 sealing the first outer cover material 210 and the second outer cover material 220 through at least one of welding and adhering, and a surplus part 320 provided inside of the sealing part 310 from the edge of each of the first outer cover material 210 and the second outer cover material 220.

The sealing part 310 may be formed at an end of an edge of each of the first outer cover material 210 and the second outer cover material 220. The sealing part 310 is configured to attach the first outer cover material 210 and the second outer cover material 220 through any one of welding and adhering.

The sealing part 310 may be formed to have a certain length L3. The certain lengthL3 of the sealing part 310 may be in a range of about 1 mm to about 5 mm.

The sealing part 310 attaches the first outer cover material 210 and the second outer cover material 220 to form a bag shape such that the core material 110 is inserted into the bag shape. The sealing part 310 may form the accommodation space S1 between the first outer cover material 210 and the second outer cover material 220.

Meanwhile, after the pressed core material 110 is inserted into the accommodation space S1 of the outer cover material 200, the surplus part 320 may be formed through any one of vacuum pressing and thermal pressing. The formation of the surplus part 320 will be described in detail in a vacuum insulation material manufacturing method to be described later.

The surplus part 320 may be formed inside of the sealing part 310.

The sum of lengths of the sealing part 310 and the surplus part 320 may be equal to a length of the coupling part 300. The length of the coupling part 300 may be in a range of about 10 mm to about 30 mm.

The coupling part 300 of the vacuum insulation portion 100, formed by the surplus part 320 and the sealing part 310, may not be cut or folded during the manufacture of the vacuum insulation material 100.

Meanwhile, the welding for forming the sealing part 310 may include thermal welding performed by applying heat.

Kinds of the first outer cover material 210 and the second outer cover material 220 may be different from each other. The first outer cover material 210 and the second outer cover material 220 may be made of different materials.

The outer cover material 200 having a bag shape, formed by the first outer cover material 210 and the second outer cover material 220, may have the accommodation space S1 in which the core material 110 is accommodated.

The accommodation space S1 is formed to accommodate the pressed core material 110 having the first thickness t1.

The core material 110 may be inserted in a first direction X and may be accommodated in the accommodation space S1.

Meanwhile, when the pressed core material 110 is accommodated in the accommodation space S1 of the outer cover material 200, the first outer cover material 210 and the second outer cover material 220 may be attached through at least one of welding, adhering and heat treatment.

The outer cover material 200 of the vacuum insulation material 100, as prepared above, may have a first region 200a contacting an outer surface of the core material 110 and a second region 200b extending from the first region 200a and placed at an edge of the core material 110.

The first region 200a and the second region 200b of the outer cover material 200 may be equally provided in the first outer cover material 210 and the second outer cover material 220, symmetrical to each other.

The first region 200a contacts the outer surface of the core material 110 to surround the core material 110.

The second region 200b extends from an edge of the first region 200a. One side of the second region 200b is integrally connected to the first region 200a, and the other side of the second region 200b is a free end. The second region 200b is provided to not have contact with the core material 110. The second region 200b is placed to protrude from the edge of the core material 110.

The second region 200b of the outer cover material 200 may be formed to math the coupling part 300.

Meanwhile, the outer cover material 200 may be formed in a shape corresponding to the core material 110. The outer cover material 200 may be formed in a tetragonal shape. The outer cover material 200 may have a first length L1 formed in a second direction Y perpendicular to the first direction X in which the core material 110 is inserted, and the second direction Y formed in the second length L2 in which the core material 110 is inserted, i.e., a direction perpendicular to the first length L1.

The outer cover material 200 may be formed in a tetragonal shape having the first direction X and the second direction Y.

The first region 200a of the outer cover material 200 may be formed in a shape corresponding to the size and shape of an upper surface or a lower surface of the core material 110. In exemplary embodiments of the present invention, the first region 200a of the outer cover material 200 is illustrated as having the tetragonal shape as an example, but the spirit of the present invention is not limited thereto. The first region 200a of the outer cover material 200 may be formed in various shapes corresponding to the size and shape of the core material 110.

In addition, the second region 200b of the outer cover material 200 may be formed to extend from the first outer cover material 210. The second region 200b of the outer cover material 200 may have a tetragonal ring shape extending from the edge of the first outer cover material 210.

Meanwhile, the first length L1 of the outer cover material 200 may be longer than a length of the core material 110 in the second direction Y by about 10 mm to about 40 mm, the length of the core material 110 being the sum of the horizontal length 11 and the first thickness t1.

In addition, the second region 200b of the outer cover material 200 may have a length of about 10 mm to about 30 mm.

The aforementioned second region 200b of the outer cover material 200 protrudes from the edge of the core material 110 so as not to contact the core material 110. The second region 200b of the outer cover material 200, not contacting the core material 110, is a free end. Since the second region 200b of the outer cover material 200 has a short length of about 10 mm to about 30 mm, a separate folding process may not be performed on the second region 200b.

Therefore, it is possible to prevent damage caused by folding or bending, thereby reducing a defective proportion caused by the damage.

Meanwhile, the second length L2 of the outer cover material 200 may vary according to the vacuum insulation material 100 and the vertical length 12 of the core material 110.

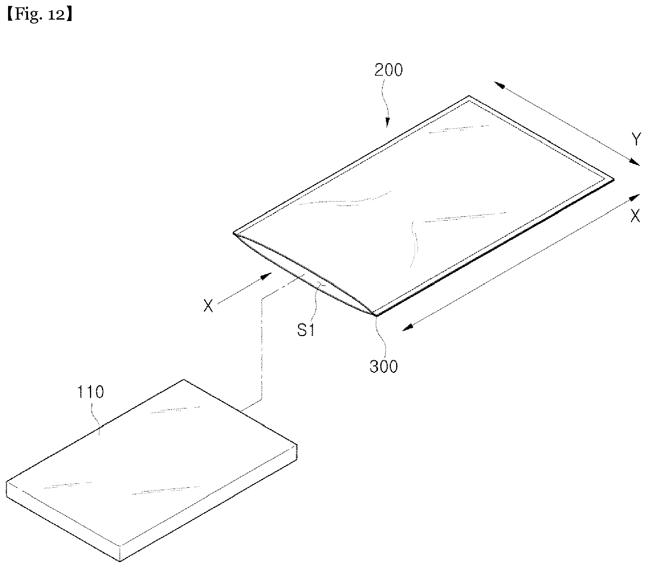

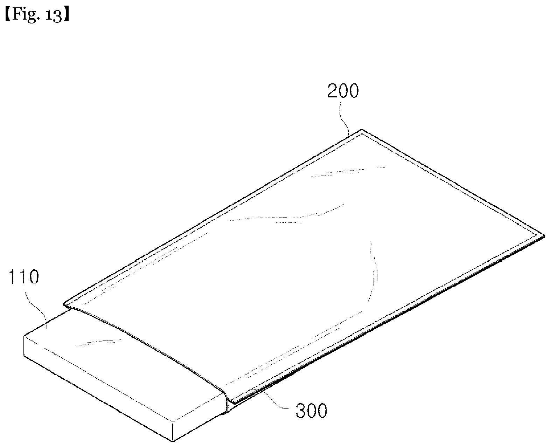

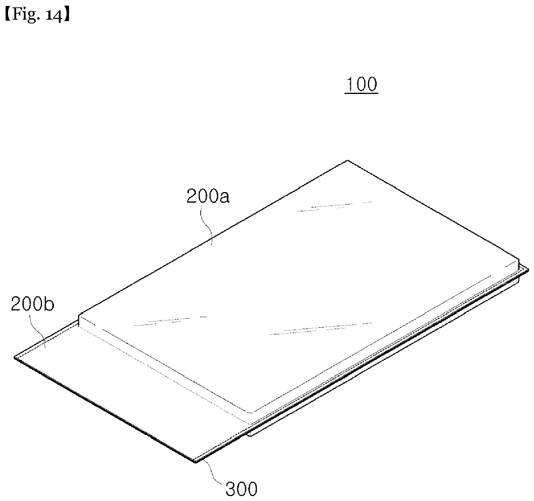

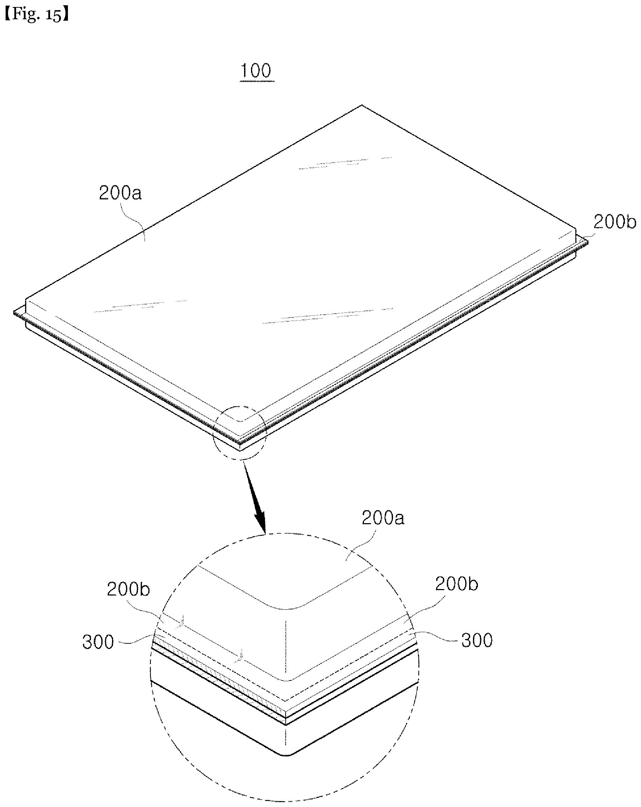

FIG. 12 is a view illustrating the outer cover material and the core material before being inserted into the outer cover material according to the exemplary embodiment of the present invention. FIG. 13 is a view illustrating a state in which the core material is inserted into the outer cover material of the vacuum insulation material according to the exemplary embodiment of the present invention. FIG. 14 is a view illustrating a state in which the vacuum insulation material according to the exemplary embodiment of the present invention is vacuumized. FIG. 15 is a view illustrating the completed vacuum insulation material according to the exemplary embodiment of the present invention.

As shown in FIGS. 12 to 15, the vacuum insulation material 100 may include the core material 110 and the outer cover material 200.

The core material 110 is pressed to have a slim plate shape.

The outer cover material 200 may be formed in a bag shape having an opened one side due to the first outer cover material 210 and the second outer cover material 220 being coupled to each other through the coupling part 300.

The outer cover material 200 has the accommodation space S1 such that the core material 110 is inserted therein.

Here, the sealing part 310 of the outer cover material 200 may have a length of about 1 mm to about 5 mm, so that a size of the outer cover material 200 may not be significantly different from a size of the core material 110.

The core material 110 is inserted into the accommodation space S1 of the outer cover material 200 in the first direction X.

Here, the first length L1 of the outer cover material 200 may be longer than the length of the core material 110 in the second direction Y by about 10 mm to about 40 mm, the length of the core material 110 being the sum of the first thickness t1 and the horizontal length 11 in a direction perpendicular to the first direction X. Accordingly, the size of the outer cover material 200 may not be significantly different from the size of the core material 110.

It is desirable that the second length L2 of the outer cover material 200 is longer than the vertical length 12 of the core material 110.

Meanwhile, when the core material 110 is placed in the accommodation space S1 of the outer cover material 200, the accommodation space S1 is depressurized to a vacuum level.

Here, the surplus part 320 may be provided between the core material 110 and the accommodation space S1 of the outer cover material 200, i.e., between the sealing part 310 of the outer cover material 200 and the core material 110.

The surplus part 320 is formed in each of the first outer cover material 210 and the second outer cover material 220, contacting each other by a compression due to the vacuum formed in the accommodation space S1 of the outer cover material 200. The surplus part 320 may be formed inside of the sealing part 310. The sealing part 310 may be formed along an edge of the core material 110.

The sum of lengths of the surplus part 320 and the sealing part 310 of the outer cover material 200 may be in a range of about 10 mm to about 30 mm. Here, the sealing part 310 may have a length of about 1 mm to about 5 mm. The manufacture of the vacuum insulation material 100 is completed through any one of welding and heat treatment (not shown).

Here, the opened one side of the outer cover material 200 is attached through any one of welding and heat treatment. The first outer cover material 210 and the second outer cover material 220 may be attached through any one of welding and heat treatment.

Meanwhile, after the heat treatment, the opened one side of the outer cover material 200, attached through any one of welding and heat treatment, may be cut to have a length corresponding to a length of the coupling part 300 of the outer cover material 200.

Therefore, in the vacuum insulation material 100, the coupling part 300 of the outer cover material 200 may have a length so as to be closely and constantly spaced from the core material. Since a heat-welded portion of the outer cover material 200 is shortened due to the coupling part 300 of the outer cover material 200, a gas may penetrate through the outer cover material 200.

In addition, each of the first outer cover material 210 and the second outer cover material 220, welded or attached through the heat treatment, has the first region 200a contacting the core material 110 and the second region 200b not contacting the core material 110. Since the second region 200b does not require a folding process of allowing the second region 200b not to contact the core material 110, an additional process may be deleted.

Here, the second region 200b of the outer cover material 200 may have the coupling part 300.

Meanwhile, the vacuum insulation material 100 may further include a blocking layer (not shown).

The blocking layer may be disposed between at least one of the first and second outer cover materials 210 and 220 and the core material 110 to prevent moisture and a gas from penetrating into the accommodation space S1.

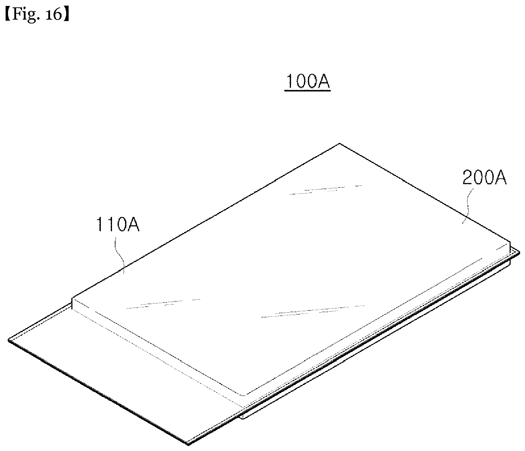

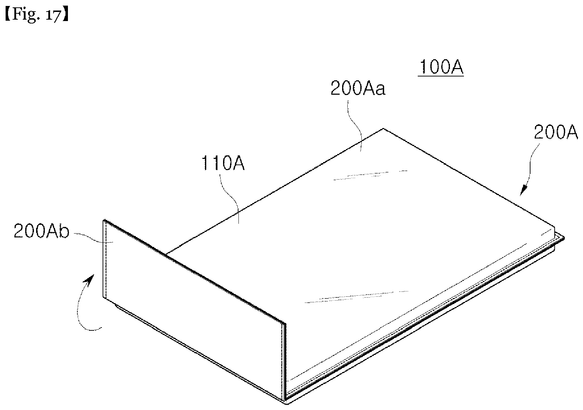

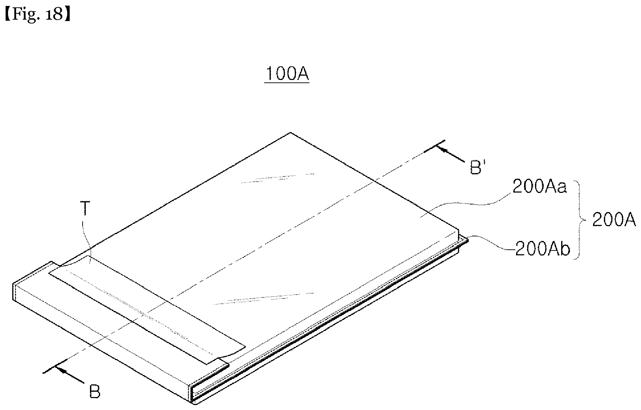

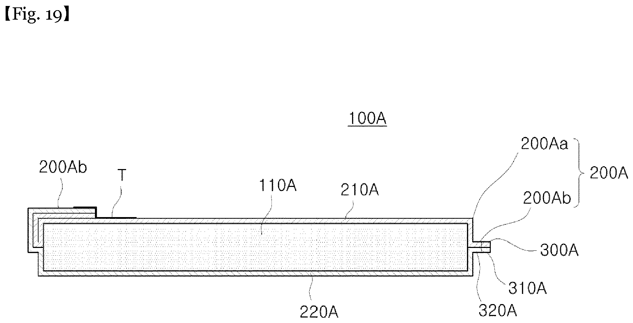

FIG. 16 is a view illustrating a state in which a core material is inserted into an outer cover material according to another exemplary embodiment of the present invention and the outer cover material is vacuumized. FIG. 17 is a view illustrating a state in which one side of a vacuum insulation material according to another embodiment of the present invention is folded. FIG. 18 is a perspective view illustrating the vacuum insulation material according to another embodiment of the present invention. FIG. 19 is a cross-sectional view taken along line B-B' of FIG. 18. Reference numerals not shown in the drawings may be seen from FIGS. 1 to 8.

As shown in FIGS. 16 to 19, a vacuum insulation material 100A may include a core material 110A and an outer cover material 200A.

The core material 110A pressed in a slim plate shape is inserted into an accommodation space S1 formed in the outer cover material 200A.

The accommodation space S1 of the outer cover material 200A may be formed by a sealing part 310A configured to attach a first outer cover material 210A and a second outer cover material 220A.

A coupling part 300A of the outer cover material 200A may have a surplus part 320A provided inside of the sealing part 310A from an edge of each of the first outer cover material 210A and the second outer cover material 220A.

The sealing part 310A may be formed at an end of an edge of each of the first outer cover material 210A and the second outer cover material 220A. The sealing part 310A is configured to attach the first outer cover material 210A and the second outer cover material 220A through any one of welding, adhering, and sealing.

The sealing part 310A may be a length of about 1 mm to about 5 mm.

The sealing part 310A couples the first outer cover material 210A and the second outer cover material 220A to form a bag shape such that the core material 110A is inserted into the bag shape. The accommodation space S1 may be formed between the first outer cover material 210A and the second outer cover material 220A by the sealing part 310A.

Here, the sealing part of the outer cover material 200A may be formed to have a minimum length of about 1 mm to about 5 mm. A first length L1 of the outer cover material 200A may be longer than a length of the core material 110A in the second direction Y by about 10 mm to about 40 mm, the length of the core material 110 being the sum of a thickness t1 and a horizontal length 11 in a direction perpendicular to the first direction X. Accordingly, a size of the outer cover material 200A may not be significantly larger than a size of the core material 110A.

Meanwhile, when the core material 110A is inserted into the accommodation space S1 of the outer cover material 200A, the accommodation space S1 is depressurized to a vacuum level.

The manufacture of the vacuum insulation material 100A is completed through any one of welding and heat treatment (not shown).

Here, after the decompression, an opened one side of the outer cover material 200A is attached through heat treatment.

The outer cover material 200A, as prepared above, may have a first region 200Aa contacting the core material 110A and a second region 200Ab not contacting the core material 200Ab.

The second region 200Ab may have the coupling part 300A of the outer cover material 200A.

Meanwhile, at least one side of the coupling part 300A constituting an edge of the outer cover material 200A may be a folded portion folded once in a direction in which the coupling part 300A overlaps the core material 110A.

Except for a portion of the second region 200Ab of the outer cover material 200A, coupled by the sealing part 310A, the remaining portion of the second region 200Ab may be folded so as to contact the first region 200Aa contacting the core material 100A.

The folded portion may be formed by folding the opened one side of the outer cover material 200A, attached through any one of welding and heat treatment after the core material 110A is inserted into the accommodation space S1 of the outer cover material 200A and the accommodation space S2 is depressurized to a vacuum level.

The second region 200Ab, contacting the first region 200Aa of the outer cover material 200A, may be fixed to the first region 200Aa through an adhesive member such as an oriented polypropylene (OPP) tape T. In exemplary embodiments of the present invention, at least one of four edges of the outer cover material is illustrated as being folded as an example, but the spirit of the present invention is not limited thereto. For example, portions in two directions of the coupling part of the outer cover material, symmetric to each other, may be folded. Here, the portions in two directions of the coupling part are folded so as to prevent defects such as damage caused by overlap and intersection of the folded portion.

Although it has been described that the vacuum insulation material and the vacuum insulation material manufacturing method according to exemplary embodiments of the present invention are applied to the refrigerator including a vacuum insulation material, the scope of the present invention is not limited thereto. For example, the vacuum insulation material and the vacuum insulation material manufacturing method can be applied to technical fields including inventions related to a building, an outer wall/interlayer of a building, an oven, a boiler, an icebox, a medical transportation box, a vehicle, a train, a ship, and the like. The invention has been illustrated and described with respect to specific exemplary embodiments. However, the invention is not limited to the above exemplary embodiments, and thus it is apparent to those skilled in the art that various modifications, additions and substitutions are possible, without departing from the scope and spirit of the invention as disclosed in the accompanying claims.

## Claims

1. A vacuum insulation material comprising:
a core material;
a first outer cover material disposed outside of the core material;
a second outer cover material coupled to the first outer cover material to form an accommodation space accommodating the core material therein; and
a coupling part provided at an edge of each of the first outer cover material and the second outer cover material,
wherein the coupling part has a length of about 10 mm to about 30 mm.

2. The vacuum insulation material of claim 1, wherein the coupling part has a sealing part provided at the edge of each of the first outer cover material and the second outer cover material and sealed through at least one of welding and adhering, and a surplus part provided inside of the sealing part.

3. The vacuum insulation material of claim 2, wherein, after the core material is inserted into the accommodation space, the surplus part is formed by at least one of vacuum pressing and thermal pressing.

4. The vacuum insulation material of claim 1, wherein the core material has a thickness of about 12 mm or less.

5. The vacuum insulation material of claim 2, wherein the sealing part has a length of about 1 mm to about 5 mm.

6. The vacuum insulation material of claim 1, wherein the first and second outer cover materials each have a first region contacting an outer surface of the core material and a second region placed at an edge of the first region and not contacting the core material.

7. The vacuum insulation material of claim 6, wherein one side of the second region is fixedly connected to the first region, and the other side of the second region is a free end.

8. The vacuum insulation material of claim 6, wherein the second region has a length of about 10 mm to about 30 mm.

9. The vacuum insulation material of claim 6, wherein at least one direction of the coupling part has a folded portion provided so as to contact the first region.

10. The vacuum insulation material of claim 9, wherein the folded portion is fixed to the first region by an adhesive member.

11. The vacuum insulation material of claim 1, wherein the core material is pressed through at least one of press pressing, thermal pressing and low-vacuum pressing.
